# EUROPÄISCHE PATENTSCHRIFT

(11) **EP 2 017 126 B1**
(45) Veröffentlichungstag und Bekanntmachung des Hinweises auf die Patenterteilung: **20.01.2010**
(21) Anmeldenummer: 08004838.2
(22) Anmeldetag: 14.03.2008
(51) Int. Cl.: B60R 1/06

(54) **Außenrückblickspiegel für Fahrzeuge, insbesondere Personenkraftwagen**
External rear view mirror for vehicles, in particular passenger vehicles
Rétroviseur extérieur pour véhicules, en particulier véhicules de transport de personnes

(30) Priorität: 14.07.2007 DE 102007032901
(43) Veröffentlichungstag der Anmeldung: 21.01.2009
(73) Patentinhaber: Dr.Ing. H.C. F. Porsche Aktiengesellschaft, 70435 Stuttgart (DE)
(72) Erfinder: Müller, Marcus, 75173 Pforzheim (DE)

(56) Entgegenhaltungen:
- WO-A-2005/120899
- DE-A1- 3 508 226
- DE-B- 1 135 319
- GB-A- 1 510 215

## Beschreibung

Die Erfindung betrifft einen Außenrückblickspiegel für Fahrzeuge, insbesondere Personenkraftwagen mit einem an einer vorderen Tür unterhalb einer Fahrzeuggürtellinie festlegbaren Spiegelfuss, wobei die Tür ein mit einer Öffnung versehenes Aussenblech und eine innere Verstärkung aufweist.

Aus der DE 35 08 226 A1 ist ein Außenrückblickspiegel für ein Fahrzeug mit einem an einer vorderen Tür unterhalb einer Fahrzeuggürtellinie festlegbaren Spiegelfuss bekannt, wobei der Spiegelfuss unter Zwischenschaltung eines Halteteiles an einer inneren Verstärkung der Tür befestigt ist.

Bei dieser Anordnung ist das Halteteil über zwei Befestigungsschrauben an der inneren Verstärkung der Tür in Lage gehalten und der Spiegelfuss ist über eine weitere lösbare Befestigung mit einem außerhalb der Tür befindlichen Abschnitt des Halteteiles verbunden.

Aufgabe der Erfindung ist es, eine äußerst steife, spielfreie Anbindung des Spiegelfusses an der inneren Verstärkung der Tür zu erzielen, die zu dem einen einfachen Aufbau aufweist.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die direkte Anbindung des Spiegelfusses an die innere Verstärkung und durch die selbstzentrierende Lagerung sowie die lediglich eine zentrale Befestigungsschraube eine einen einfachen Aufbau aufweisende, äußerst steife und spielfreie Anbindung des Spiegelfusses an die innere Verstärkung der Tür gewährleistet ist. Die innere Verstärkung der Tür wird durch ein vorzugsweise umlaufendes im Druckgussverfahren aus einer Leichtmetalllegierung hergestelltes inneres Rahmenteil gebildet und ist in sich relativ steif. Die selbstzentrierende Lagerung zwischen dem inneren Tragteil des Spiegelfusses und der inneren Verstärkung wird durch eine 6-Punktlagerung gebildet und ist somit statisch hinsichtlich der Kräfte und Momente eindeutig definiert. Die 6-Punktlagerung wird durch einstückig angeformte Lagerabschnitte am inneren Rahmenteil und am unteren Endbereich des Tragteiles gebildet, wobei die Lagerabschnitte bei montiertem Aussenrückblickspiegel bereichsweise und zwar lediglich im Bereich von jeweils 6 Schrägflächen formschlüssig miteinander zusammenwirken. Dadurch wird eine statisch einwandfreie definierte Anbindung des Spiegelfusses an die innere Verstärkung der Tür erzielt.

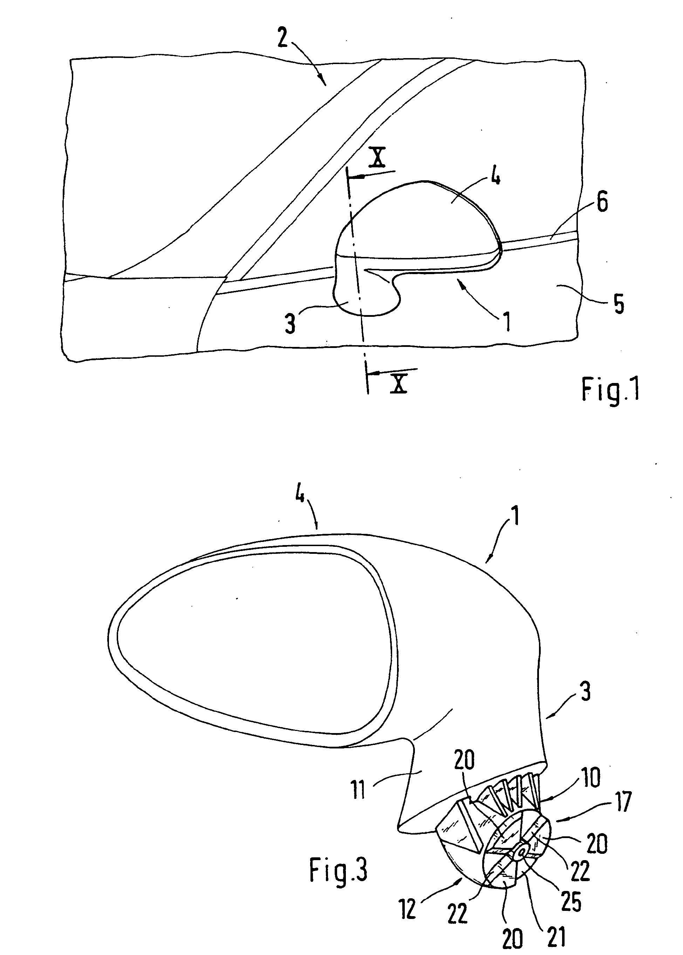

Ein Ausführungsbeispiel der Erfindung ist in den Figuren näher erläutert. Es zeigt
Figur 1 eine perspektivische Ansicht von schräg vorne auf einen Teilbereich eines Personenkraftwagens mit einem Aussenrückblickspiegel

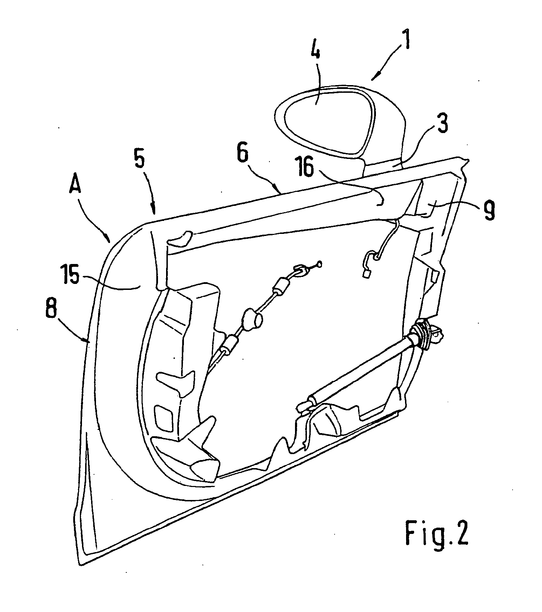

Figur 2 eine perspektivische Ansicht von innen auf ein Außenmodul einer Kraftfahrzeugtür mit dem daran befestigten Aussenrückblickspiegel
Figur 3 eine perspektivische Ansicht von hinten auf den Aussenrückblickspiegel, der einen Spiegelfuss mit einem inneren Tragteil umfasst

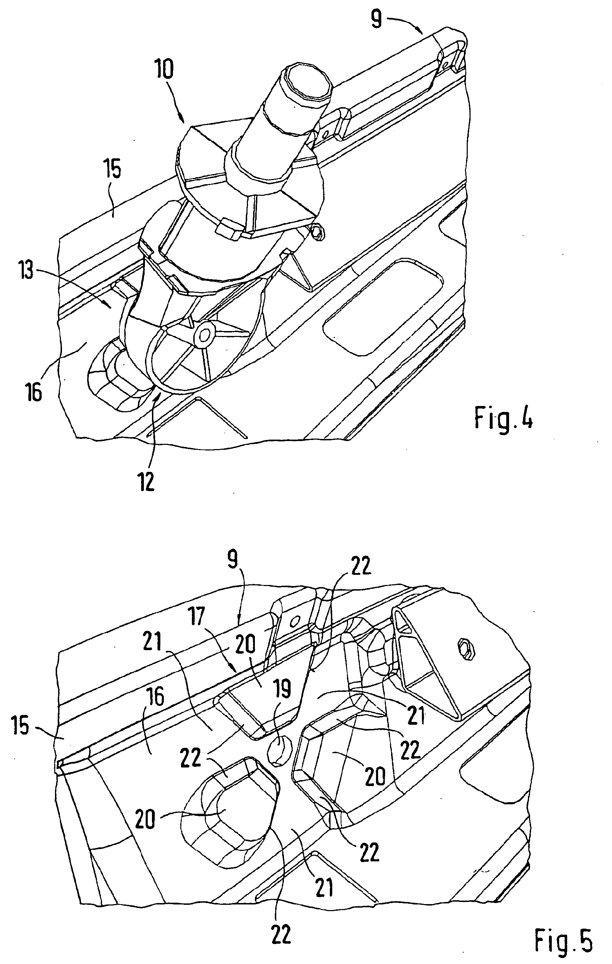

Figur 4 eine perspektivische Ansicht von innen auf die Anbindung des Spiegelfusses an die Kraftfahrzeugtür
Figur 5 eine perspektivische Ansicht von innen auf das Aussenmodul der Kraftfahrzeugtür

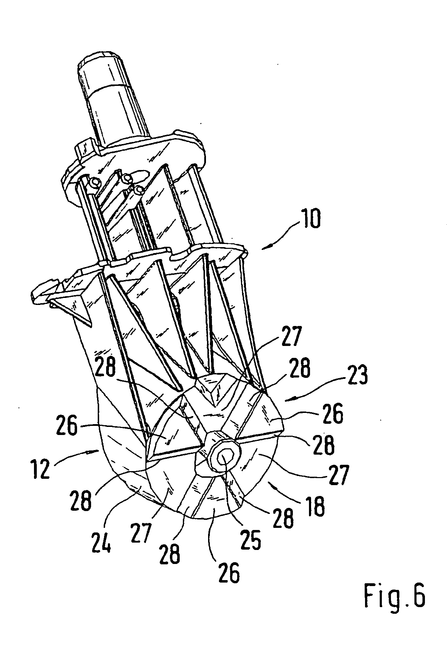

Figur 6 eine perspektivische Ansicht auf das innere Tragteil des Spiegelfusses

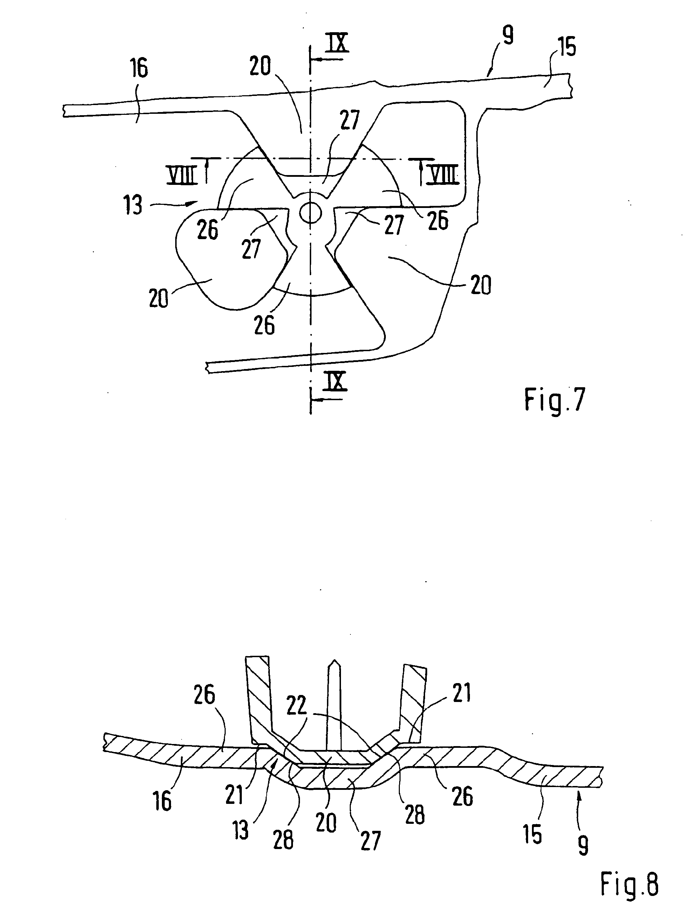

Figur 7 eine Ansicht von Innen auf die selbstzentrierende Lagerung des Spiegelfusses
Figur 8 einen Schnitt nach der Linie VIII-VIII der Figur 7 in größerer Darstellung
Figur 9 einen Schnitt nach der Linie IX-IX der Figur 7 in größerer Darstellung
Figur 10 einen Schnitt nach der Linie X-X der Figur 1 in größerer Darstellung

Ein Aussenrückblickspiegel 1 für Fahrzeuge, insbesondere Personenkraftwagen 2 setzt sich aus einem Spiegelfuss 3 und einem Spiegelkopf 4 zusammen und ist an einer vorderen seitlichen Tür 5 unterhalb einer Fahrzeuggürtellinie 6 befestigt. Die Tür umfasst im Befestigungsbereich des Aussenrückblickspiegels 1 ein mit einer Öffnung 7 versehenes Aussenblech 8 und eine innere Verstärkung 9.

Im Ausführungsbeispiel besteht der Spiegelfuss 3 aus einem inneren Tragteil 10 und einer äußeren Spiegelfussblende 11. Das innere Tragteil 10 wird vorzugsweise durch ein Druckgussteil aus einer Leichtmetalllegierung gebildet, wogegen die äußere Spiegelfussblende 11 durch ein ein- oder mehrteiliges Kunststoffteil gebildet wird.

Erfindungsgemäß ist ein unterer Endbereich 12 des inneren Tragteiles 10 des Spiegelfusses 3 durch die Öffnung 7 des Aussenbleches 8 hindurchgeführt und innerhalb der Tür 5 über eine selbstzentrierende Lagerung 13 sowie eine zentrale Befestigungsschraube 14 direkt mit der inneren Verstärkung 9 der Tür 5 verbunden. Die innere Verstärkung 9 wird im Ausführungsbeispiel durch ein vorzugsweise umlaufendes inneres Rahmenteil 15 gebildet, das im Druckgussverfahren aus einer Leichtmetalllegierung (z.B. Alu- oder Mg-Legierung) hergestellt ist. Die innere Verstärkung könnte jedoch auch durch zusammengesetzte Strangpressprofilteile gebildet werden, die zusammen ein umlaufendes Rahmenteil 15 bilden.

Das umlaufende innere Rahmenteil 15 und das aus Alu oder Stahlblech gefertigte Aussenblech 8 bildet ein vorgefertigtes Aussenmodul A der Tür 5, an dem der Aussenrückblickspiegel 1 montiert ist. Der untere Randbereich 12 des Tragteiles 10 des Spiegelfusses 3 ist an einen oberen, etwa horizontal ausgerichteten, sich in Fahrzeuglängsrichtung erstreckenden Teilbereich 16 des inneren Rahmenteiles 15 angebunden.

Die selbstzentrierende Lagerung 13 zwischen dem Tragteil 10 des Spiegelfusses 3 und der inneren Verstärkung 9 der Tür 5 ist als 6-Punktlagerung ausgebildet, wodurch eine statisch eindeutig definierte, vibrationsarme und steife Anbindung des Aussenrückblickspiegels 1 an die Tür 5 erzielt wird.

Zur Bildung der 6-Punktlagerung sind am inneren Rahmenteil 15 der Tür 5 und am unteren Endbereich 12 des Tragteiles 10 jeweils einstückig angeformte Lagerabschnitte 17, 18 vorgesehen, die bei montiertem Aussenrückblickspiegel 1 bereichsweise formschlüssig miteinander zusammenwirken. Die Lagerabschnitte 17 der inneren Verstärkung 9 der Tür 5 sind am oberen, etwa horizontal ausgerichteten Teilbereich 16 des inneren Rahmenteiles 15 vorgesehen und zwar auf der dem Aussenblech 8 zugekehrten Seite. Am Teilbereich 16 des Rahmenteils 5 sind drei etwa sternförmig zu einer zentralen Durchgangsbohrung 19 für die Befestigungsschraube 14 angeordnete vorstehende Flächenbereiche 20 und drei dazwischenliegend angeordnete vertiefte Flächenbereiche 21 vorgesehen, wobei jeder vorstehende Flächenbereich 20 über Schrägflächen 22 an angrenzende vertiefte Flächenbereiche 21 angeschlossen ist.

Die Lagerabschnitte 18 des Spiegelfusses 3 sind am unteren Endbereich 12 des inneren Tragteiles 10 vorgesehen und zwar an der Aussenseite einer geschlossenen Stirnseite 23 eines etwa liegend angeordneten hohlzylindrischen Grundkörpers 24. Die Lagerabschnitte 18 des Spiegelfusses 3 werden durch drei etwa sternförmig zu einer zentralen Innengewindeaufnahme 25 angeordnete vorstehende kreissegementförmige Flächenbereiche 26 und drei dazwischenliegende vertiefte Flächenbereiche 27 gebildet.

Jeder vorstehende kreissegmentförmige Flächenbereich 26 ist über Schrägflächen 28 an die beiden benachbart angeordneten vertieften Flächenbereiche 27 angeschlossen.

Bei montiertem Aussenrückblickspiegel 1 liegen der Spiegelfuss 3 und die innere Verstärkung 9 der Tür 5 lediglich im kompletten Bereich oder in Teilbereichen der Längserstreckung der jeweils sechs Schrägflächen 22, 28 unmittelbar aneinander an.

Falls eine Abstützung nur in Teilbereichen der Längserstreckung der jeweils sechs Schrägflächen 22, 28 vorgesehen ist, so sind diese Teilbereiche zur Erzielung einer stabilen Basis relativ weit vom Zentrum der zentralen Befestigungsschraube 14 entfernt angeordnet.

An der 6-Punktlagerung könnte zumindest einer der vorstehenden Flächenbereiche 20 der inneren Verstärkung 9 durch ein sich in Fahrzeugquerrichtung erstreckendes Einstellelement 29 ersetzt werden, wodurch eine Einstellmöglichkeit in Fahrzeugquerrichtung gegeben wird.

Die Befestigungsschraube wird von der dem Fahrgastraum zugekehrten Seite der inneren Verstärkung 9 durch die Durchgangsbohrung 19 der inneren Verstärkung 9 in die Innengewindeaufnahme 25 des Tragteiles 10 eingedreht und stützt sich mit einem verbreiterten Kopfabschnitt 30 an der inneren Verstärkung 9 ab. Zwischen korrespondierenden Flächenabschnitten der inneren Verstärkung 9 und des Spiegelfusses 3 verläuft in Fahrzeugquerrichtung gesehen jeweils ein geringer Spalt.

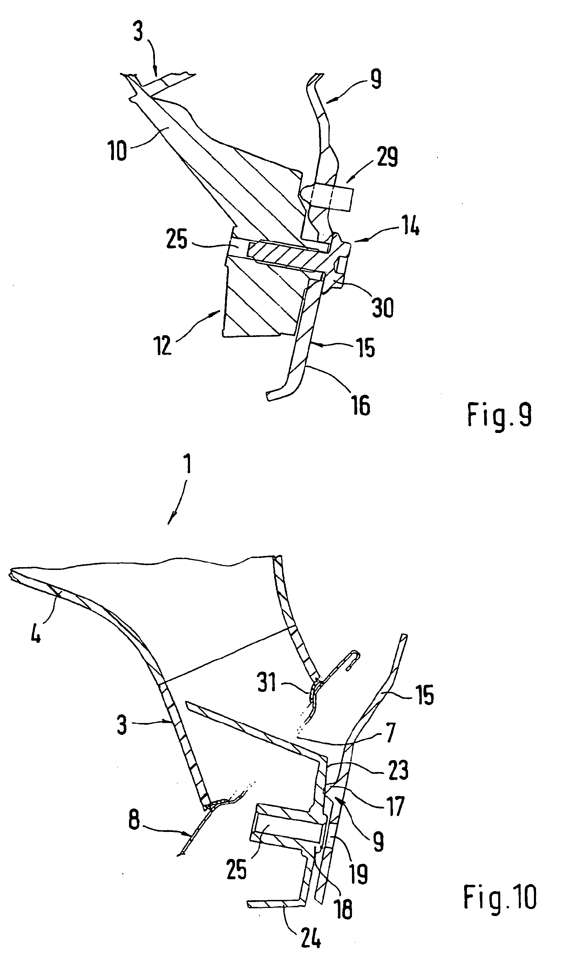

Der Spiegelfuss 3 stützt sich weder mit dem Tragteil 10 noch mit der Spiegelfussblende 11 unmittelbar an der Aussenseite des Aussenblechs 8 ab. Gemäß Figur 10 weist die Spiegelfussblende 11 endseitig einen lippenförmigen Dichtrahmen 31 auf, der an der Aussenseite des Aussenblechs 8 benachbart der Öffnung 7 aufliegt.

## Patentansprüche

1. Aussenrückblickspiegel für Fahrzeuge, insbesondere Personenkraftwagen, mit einem an einer vorderen Tür unterhalb einer Fahrzeuggürtellinie festlegbaren Spiegelfuss, wobei die Tür ein mit einer Öffnung versehenes Aussenblech und eine innere Verstärkung aufweist, **dadurch gekennzeichnet, dass** ein unterer Endbereich (12) eines inneren Tragteiles (10) des Spiegelfusses (3) durch die Öffnung (7) des Aussenbleches (8) hindurchgeführt und innerhalb der Tür (5) über eine selbstzentrierende Lagerung (13) sowie eine zentrale Befestigungsschraube (14) direkt mit der inneren Verstärkung (9) der Tür (5) verbunden ist.

2. Aussenrückblickspiegel nach Anspruch 1 **dadurch gekennzeichnet dass** die innere Verstärkung (9) durch ein vorzugsweise umlaufendes inneres Rahmenteil (15) gebildet wird, das im Druckgussverfahren aus einer Leichtmetalllegierung hergestellt ist.

3. Aussenrückblickspiegel nach den Ansprüchen 1 und 2 **dadurch gekennzeichnet dass** der untere Endbereich des Tragteiles (12) des Spiegelfusses (3) an einen oberen, etwa horizontal ausgerichteten, sich in Fahrzeuglängsrichtung erstreckenden Teilbereich (16) des inneren Rahmenteiles (15) angebunden ist.

4. Aussenrückblickspiegel nach Anspruch 1 **dadurch gekennzeichnet dass** die selbstzentrierende Lagerung (13) durch eine 6-Punktlagerung gebildet wird.

5. Aussenrückblickspiegel nach Anspruch 4 **dadurch gekennzeichnet, dass** zur Bildung der 6-Punktlagerung am inneren Rahmenteil (15) der Tür (5) und am unteren Endbereich (12) des Tragteiles (10) jeweils einstückig angeformte Lagerabschnitte (17, 18) vorgesehen sind, die bei montiertem Aussenrückblickspiegel (1) bereichsweise formschlüssig miteinander zusammenwirken.

6. Aussenrückblickspiegel nach einem der vorangegangenen Ansprüche **dadurch gekennzeichnet dass** die Lagerabschnitte (17) der inneren Verstärkung (9) der Tür (5) am oberen, etwa horizontal ausgerichteten Teilbereich (16) des inneren Rahmenteiles (15) vorgesehen sind und zwar in Fahrzeugquerrichtung gesehen auf der dem Aussenblech (8) zugewandten Seite.

7. Aussenrückblickspiegel nach Anspruch 6 **dadurch gekennzeichnet dass** die Lagerabschnitte (17) der.inneren Verstärkung (9) durch drei sternförmig zu einer zentralen Durchgangsbohrung (19) für die Befestigungsschraube (14) angeordnete vorstehende Flächenbereiche (20) und dazwischenliegend angeordnete vertiefte Flächenbereiche (21) gebildet werden, wobei jeder vorstehende Flächenbereich (20) beiderseits über Schrägflächen (22) an angrenzende vertiefte Flächenbereiche (21) angeschlossen ist.

8. Aussenrückblickspiegel nach einem der vorangegangenen Ansprüche **dadurch gekennzeichnet dass** die Lagerabschnitte (18) des Spiegelfusses (3) am unteren Endbereich (12) des inneren Tragteiles (10) vorgesehen sind und zwar an einer Aussenseite einer Stirnseite (23) eines etwa hohlzylindrischen Grundkörpers (24).

9. Aussenrückblickspiegel nach Anspruch 8 **dadurch gekennzeichnet dass** die Lagerabschnitte (18) des Spiegelfusses (3) durch drei etwa sternförmig zu einer zentralen Innengewindeaufnahme (25) angeordnete, vorstehende kreissegmentförmige Flächenbereiche (26) und drei dazwischenliegende vertiefte Flächenbereiche (27) gebildet werden, wobei jeder vorstehende kreissegmentförmige Flächenbereich (26) beiderseits über Schrägflächen (28) an angrenzende vertiefte Flächenbereiche (27) angeschlossen ist.

10. Aussenrückblickspiegel nach einem der vorangegangenen Ansprüche **dadurch gekennzeichnet dass** bei montiertem Aussenrückblickspiegel (1) der Spiegelfuss (3) und die innere Verstärkung (9) der Tür (5) lediglich im kompletten Bereich oder in Teilbereichen der jeweils sechs Schrägflächen (22, 28) unmittelbar aneinander anliegen.

## Claims

1. External rear view mirror for vehicles, in particular passenger vehicles, with a mirror base, which is fixable on a front door below a vehicle belt line, wherein the door has an outer panel, which is provided with an opening, and an internal reinforcement, **characterized in that** a lower end region (12) of an inner supporting part (10) of the mirror base (3) is guided through the opening (7) in the outer panel (8) and is connected within the door (5) directly to the internal reinforcement (9) of the door (5) via a self-centring mounting (13) and a central fastening screw (14).

2. External rear view mirror according to Claim 1, **characterized in that** the internal reinforcement (9) is formed by a preferably encircling, internal frame part (15) which is produced from a light metal alloy by die casting.

3. External rear view mirror according to Claims 1 and 2, **characterized in that** the lower end region of the supporting part (12) of the mirror base (3) is connected to an upper, approximately horizontally oriented sub-region (16) of the internal frame part (15) which sub-region extends in the longitudinal direction of the vehicle.

4. External rear view mirror according to Claim 1, **characterized in that** the self-centring mounting (13) is formed by a 6-point mounting.

5. External rear view mirror according to Claim 4, **characterized in that**, in order to form the 6-point mounting, bearing sections (17, 18) which are each moulded-on as a single part are provided on the internal frame part (15) of the door (5) and on the lower end region (12) of the supporting part (10) and, when the external rear view mirror (1) is fitted, interact in regions in a form-fitting manner with each other.

6. External rear view mirror according to one of the preceding claims, **characterized in that** the bearing sections (17) of the internal reinforcement (9) of the door (5) are provided on the upper, approximately horizontally oriented sub-region (16) of the internal frame part (15), to be precise on the side facing the outer panel (8), as seen in the transverse direction of the vehicle.

7. External rear view mirror according to Claim 6, **characterized in that** the bearing sections (17) of the internal reinforcement (9) are formed by three protruding surface regions (20), which are arranged in a star-shaped manner with respect to a central passage hole (19) for the fastening screw (14), and recessed surface regions (21) arranged in between, each protruding surface region (20) being connected on both sides via oblique surfaces (22) to adjacent, recessed surface regions (21).

8. External rear view mirror according to one of the preceding claims, **characterized in that** the bearing sections (18) of the mirror base (3) are provided on the lower end region (12) of the inner supporting part (10), to be precise on an outer side of an end side (23) of an approximately hollow-cylindrical basic body (24).

9. External rear view mirror according to Claim 8, **characterized in that** the bearing sections (18) of the mirror base (3) are formed by three protruding, circular-segment-shaped surface regions (26), which are arranged in an approximately star-shaped manner with respect to a central internal threaded receptacle (25), and three recessed surface regions (27) located in between, each protruding circular-segment-shaped surface region (26) being connected on both sides via oblique surfaces (28) to adjacent, recessed surface regions (27).

10. External rear view mirror according to one of the preceding claims, **characterized in that**, when the external rear view mirror (1) is mounted, the mirror base (3) and the internal reinforcement (9) of the door (5) bear directly against each other only in the complete region or in sub-regions of the in each case six oblique surfaces (22, 28).

## Revendications

1. Rétroviseur extérieur pour véhicule, en particulier pour voiture automobile, qui présente un pied de rétroviseur qui peut être fixé sur une porte avant en dessous d'une ligne de ceinture du véhicule, la porte présentant une tôle extérieure dotée d'une ouverture et un renfort intérieur,
**caractérisé en ce que**
une partie (12) d'extrémité inférieure d'une partie portante intérieure (10) du pied (3) du rétroviseur est passée dans l'ouverture (7) de la tôle extérieure (8) et est reliée directement au renfort intérieur (9) de la porte (5) à l'intérieur de la porte (5) par l'intermédiaire d'un palier (13) à auto-centrage et d'une vis centrale de fixation (14).

2. Rétroviseur extérieur selon la revendication 1, **caractérisé en ce que** le renfort intérieur (9) est formé par une pièce intérieure d'encadrement (15) de préférence périphérique fabriquée par moulage sous pression d'un alliage de métaux légers.

3. Rétroviseur extérieur selon les revendications 1 et 2, **caractérisé en ce que** la partie d'extrémité inférieure de la pièce portante (12) du pied (3) du rétroviseur est alignée sur une partie supérieure (16), orientée sensiblement à l'horizontale et s'étendant dans le sens de la longueur du véhicule, de la pièce intérieure d'encadrement (15).

4. Rétroviseur extérieur selon la revendication 1, **caractérisé en ce que** le palier (13) à auto-centrage est formé par un palier à 6 points.

5. Rétroviseur extérieur selon la revendication 4, **caractérisé en ce que** pour former le palier à 6 points, des parties de palier (17, 18) formées d'une seule pièce sont prévues sur la pièce intérieure d'encadrement (15) de la porte (5) et sur la partie d'extrémité inférieure (12) de la pièce portante (10) et coopèrent par parties les unes avec les autres en correspondance géométrique lorsque le rétroviseur extérieur (1) est monté.

6. Rétroviseur extérieur selon l'une des revendications précédentes, **caractérisé en ce que** les parties de palier (17) du renfort intérieur (9) de la porte (5) sont prévues sur la partie supérieure (16) orientée sensiblement à l'horizontale de la pièce intérieure d'encadrement (15), sur le côté non tourné vers la tôle extérieure (8) dans la direction transversale du véhicule.

7. Rétroviseur extérieur selon la revendication 6, **caractérisé en ce que** les parties de palier (17) du renfort intérieur (9) sont formées par trois parties de surface (20) qui débordent en étoile autour d'un alésage central de passage (19) prévu pour la vis de fixation (14) et par des parties de surface (21) en creux disposées entre les premières, chaque partie de surface (20) en débord étant adjacente sur ses deux côtés à des parties de surface (21) en creux par l'intermédiaire de surfaces obliques (22).

8. Rétroviseur extérieur selon l'une des revendications précédentes, **caractérisé en ce que** les parties de palier (18) du pied (3) du rétroviseur sont prévues sur la partie d'extrémité inférieure (12) de la pièce portante intérieure (10) sur un côté extérieur du côté frontal (23) d'un corps de base (24) sensiblement en forme de cylindre creux.

9. Rétroviseur extérieur selon la revendication 8, **caractérisé en ce que** les parties de palier (18) du pied (3) du rétroviseur sont formées par trois parties de surface (26) en forme de segment de cercle, en saillie et disposées en étoile autour d'un logement central (25) à filet intérieur et par trois parties intercalaires de surface (27) en creux, chaque partie de surface (26) en forme de segment de cercle en saillie étant raccordée des deux côtés à des parties de surface (27) en creux adjacentes par l'intermédiaire de surfaces obliques (28).

10. Rétroviseur extérieur selon l'une des revendications précédentes, **caractérisé en ce que** lorsque le rétroviseur extérieur (1) est monté, le pied (3) du rétroviseur et le renfort intérieur (9) de la porte (5) ne reposent directement l'un contre l'autre que par la totalité ou une partie des six surfaces obliques (22, 28).
